(19) Europäisches Patentamt
European Patent Office
Office européen des brevets

(11) **EP 4 659 999 A1**

(12) **EUROPÄISCHE PATENTANMELDUNG**

(43) Veröffentlichungstag:
   **10.12.2025  Patentblatt 2025/50**

(21) Anmeldenummer: **25180650.1**

(22) Anmeldetag: **04.06.2025**

(51) Internationale Patentklassifikation (IPC):
   **B60L 58/24** *(2019.01)*   **B60L 58/26** *(2019.01)*
   **H01M 10/44** *(2006.01)*   **H01M 10/48** *(2006.01)*
   **H02J 7/00** *(2006.01)*

(52) Gemeinsame Patentklassifikation (CPC):
   **B60L 58/24; B60L 58/26; H01M 10/443;**
   **H01M 10/486; H02J 7/007192; H02J 7/007194;**
   B60L 58/12; B60L 2240/545; B60L 2260/56;
   H01M 10/54; H01M 2220/20

(84) Benannte Vertragsstaaten:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Benannte Erstreckungsstaaten:
   **BA**
   Benannte Validierungsstaaten:
   **GE KH LA MA MD TN**

(30) Priorität:  **06.06.2024  DE 102024205204**

(71) Anmelder: **Robert Bosch GmbH**
   **70442 Stuttgart (DE)**

(72) Erfinder:
   • **Eckardt, Marco**
     **97753 Karlstadt (DE)**

   • **Wegmann, Raphael**
     **71263 Weil Der Stadt (DE)**
   • **Herrmann, Karl-Guenter**
     **97753 Karlstadt (DE)**
   • **Bischoff, Christian**
     **70378 Stuttgart (DE)**
   • **Luetke Juedefeld, Dominik**
     **48159 Muenster (DE)**
   • **Kempf, Karl**
     **63839 Kleinwallstadt (DE)**
   • **Philipczyk, Moritz**
     **97816 Lohr Am Main (DE)**
   • **Bihler, Christoph**
     **70736 Fellbach (DE)**

(54) **VERFAHREN ZUM (TIEF-)ENTLADEN VON (FAHRZEUG-)BATTERIEEINHEITEN**

(57)   Die Erfindung betrifft Verfahren zum Entladen einer Batterieeinheit, umfassend: Durchführen (220) eines Entladevorgangs der Batterieeinheit; Bestimmen (230) eines zeitlichen Verlaufs einer Temperatur der Batterieeinheit während eines vorgegebenen Zeitintervalls des Entladevorgangs, insbesondere zu Beginn des Entladevorgangs; Bestimmen (250) eines Wendepunkts des zeitlichen Verlaufs der Temperatur in dem vorgegebenen Zeitintervall; Bestimmen (260) eines zu erwartenden Maximalwerts der Temperatur der Batterieeinheit abhängig von dem bestimmten Wendepunkt; Durchführen (270) des Entladevorgangs nach dem vorgegebenen Zeitintervall abhängig von dem bestimmten, zu erwartenden Maximalwert, insbesondere Vorgeben einer Stromstärke des Entladevorgangs nach dem vorgegebenen Zeitintervall abhängig von dem bestimmten zu erwartenden Maximalwert.

**Fig. 2**

**Beschreibung**

Die vorliegende Erfindung betrifft ein Verfahren zum Entladen einer Batterieeinheit sowie eine Recheneinheit, eine Vorrichtung und ein Computerprogramm zu dessen Durchführung.

Hintergrund der Erfindung

Akkumulatoren bzw. Batterien in (Kraft- bzw. Elektro-) Fahrzeugen oder in der elektrischen Antriebstechnik können nach ihrem Einsatz am Ende ihrer Lebensdauer einem Recycling-prozess zugeführt werden. Ferner können auch Batterien, die am Ende ihres Fertigungsprozesses als nicht in Ordnung gekennzeichnet wurden und für ihren vorgesehenen Einsatzzweck nicht freigegeben werden können, einem Recyclingprozess zugeführt werden. Vor dem Recyceln derartiger Batterien ist es sinnvoll, diese zunächst möglichst vollständig zu entladen, um die Restenergie der Batterien noch nutzen zu können und auch um Gefahrenquellen für das Recycling auszuschalten.

Offenbarung der Erfindung

Erfindungsgemäß werden ein Verfahren zum Entladen einer Batterieeinheit sowie eine Recheneinheit, eine Vorrichtung und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung bedient sich der Maßnahme, einen Entladevorgang bzw. einen Entladeprozess einer Batterieeinheit unter Berücksichtigung eines Temperaturverlaufs durchgeführt und insbesondere so durchgeführt, dass eine vorgebbare Maximaltemperatur nicht überschritten wird, um Schäden und Gefahren zu vermeiden. Dabei kann eine zukünftige Temperatur in Abhängigkeit von einem Wendepunkt im zeitlichen Temperaturverlauf abgeschätzt werden. Die Erfindung ist insbesondere in der Lage, aus der Anstiegsfunktion der Temperatur auf deren Endwert zu schließen. Somit stehen frühzeitig Informationen zur Verfügung, mit denen man bereits auf den Entladeprozess einwirken kann, ohne dass eine als kritisch bekannte Temperatur überhaupt erreicht wird.

Bei der Batterieeinheit handelt es sich insbesondere um einen Akkumulator (stationär oder mobil) bzw. eine Batterie eines (Kraft- bzw. Elektro-) Fahrzeugs. Die Batterieeinheit soll im Zuge des Entladevorgangs zweckmäßigerweise vollständig (tief-) entladen werden, um beispielsweise energiefrei und ohne Gefahr einem Recycling-Prozess zugeführt werden zu können. Beispielsweise können die Polklemmen der Batterieeinheit im Zuge des Entladevorgangs mit einer leitfähigen Verbindung kurzgeschlossen werden. Zu diesem Zweck kann die Batterieeinheit mit einer Entladeeinheit bzw. einer Entladeschaltung elektrisch verbunden werden, welche die Batterieeinheit (tief-) entladen kann. Die Entladeeinheit kann beispielsweise ein Entladegerät mit Polumschaltung aufweisen sowie ferner insbesondere ein Treibermodul, z.B. in Form einer weiteren Batterieeinheit. Wenn die Batterieeinheit beispielsweise über eine elektrische Quelle mit Umpolung oder ein Vierquadranten-Netzteil entladen wird, kann auch auf ein Treibermodul verzichtet werden.

Ein zeitlicher Verlauf einer Temperatur der Batterieeinheit wird während eines vorgegebenen Zeitintervalls des Entladevorgangs bestimmt. Zu diesem Zweck kann eine Temperaturmesseinheit vorgesehen sein, die z.B. eine Wärmebildkamera aufweisen kann und/oder ein Widerstandsthermometer, z.B. ein Platin-Widerstandsthermometer, z.B. einen PT100-Sensor, und/oder ein Thermoelement, z.B. vom Typ K. Besonders zweckmäßig wird der zeitliche Verlauf der Temperatur zu Beginn des Entladevorgangs bestimmt bzw. während eines vorgegebenen Zeitintervalls zu Beginn des Entladevorgangs bzw. von Beginn an. Das vorgegebene Zeitintervall kann insbesondere zusammen mit dem Entladevorgang gestartet werden. Das vorgegebene Zeitintervall beträgt zweckmäßigerweise nur einen Teil der Dauer des gesamten Entladevorgangs, beispielsweise weniger als 50% der Dauer des Entladevorgangs, insbesondere weniger als 45% der Dauer des Entladevorgangs, insbesondere weniger als 40% der Dauer des Entladevorgangs, insbesondere weniger als 35% der Dauer des Entladevorgangs, insbesondere weniger als 30% der Dauer des Entladevorgangs.

Es wird ein Wendepunkt des zeitlichen Verlaufs der Temperatur in dem vorgegebenen Zeitintervall bestimmt. Zu diesem Zweck kann ein Gradient bzw. die erste Ableitung des zeitlichen Verlaufs der Temperatur nach der Zeit bestimmt werden. Der Wendepunkt kann mit Hilfe des Gradienten bestimmt werden, insbesondere als ein Extremum in dem Gradienten. Das vorgegebene Zeitintervall kann mit dem Erreichen des Wendepunkts enden.

Abhängig von dem bestimmten Wendepunkt wird ein zu erwartender Maximalwert der Temperatur der Batterieeinheit bestimmt. Dieser zu erwartende Maximalwert charakterisiert insbesondere einen maximalen Temperaturwert, welchen die Batterieeinheit erreichen würde, wenn der Entladevorgang mit denselben Parametern wie in dem vorgegebenen Zeitintervall fortgesetzt werden würde, insbesondere mit derselben Stromstärke wie in dem vorgegebenen Zeitintervall. Somit kann abhängig von dem Temperaturverlauf zu Beginn des Entladevorgangs abgeschätzt werden, wie sich die Temperatur der Batterieeinheit im Laufe des restlichen Entladevorgangs verändern wird. Ausgehend von dieser Abschätzung kann auf den nachfolgenden, restlichen Entladevorgang Einfluss genommen werden.

Der Entladevorgang wird dann nach dem vorgegebenen Zeitintervall abhängig von dem bestimmten, zu erwartenden Maximalwert der Temperatur durchgeführt. Besonders zweckmäßig kann eine Stromstärke des Entladevorgangs nach dem vorgegebenen Zeitintervall abhängig von dem bestimmten Maximalwert vorgegeben (beispielsweise geregelt oder gesteuert) werden. Besonders zweckmäßig kann auf den Entladevorgang derart Einfluss genommen werden, dass die Batterietemperatur einen maximal zulässigen Grenzwert nicht erreicht, welcher aus Sicherheitsgründen nicht überschritten werden sollte. Da sich die Stromstärke während des Entladevorgangs insbesondere direkt auf die Temperatur der Batterieeinheit auswirkt, kann durch Anpassen der Stromstärke nach dem vorgegebenen Zeitintervall der Entladevorgang zweckmäßigerweise derart beeinflusst werden, dass dieser maximal zulässige Grenzwert nicht erreicht wird. Ferner kann der Entladevorgang abhängig von dem zu erwartenden Maximalwert der Temperatur beispielsweise beeinflusst werden, um die Effizienz des Entladevorans zu erhöhen bzw. um den Entladevorgang zu optimieren.

Im Rahmen der vorliegenden Erfindung wurde erkannt, dass aus dem Temperaturanstieg zu Beginn des Entladevorgangs, im Speziellen aus dem Wendepunkt des Temperaturverlaufs zu Beginn des Entladevorgangs, auf die maximal auftretende Temperatur zum Ende des Entladevorgangs rückgeschlossen werden kann, da die Erwärmung einem bestimmten Verlauf folgt. Ausgehend von dieser Erkenntnis kann der weitere Entladevorgang derart gezielt beeinflusst werden, dass der maximal zulässige Temperaturgrenzwert nicht erreicht wird und der weitere Entladevorgang auf sichere, gefahrenfreie, effiziente und optimierte Weise durchgeführt werden kann. Insbesondere kann somit während der Tiefentladung mit einer gegebenen Stromstärke die zu erwartende Endtemperatur der Batterieeinheit bestimmt werden und eine kritische Endtemperatur kann durch eine vorausschauende Anpassung oder Abschaltung der Stromstärke verhindert werden.

Da es im Zuge des Entladevorgangs zu einem signifikanten Anstieg der Temperatur der Batterieeinheit kommen kann, kann auf herkömmliche Weise die Temperatur der zu entladenden Batterieeinheit beispielsweise mittels einer Wärmebildkamera gemessen und kontinuierlich mit einem Temperaturgrenzwert verglichen werden. Sobald dieser Grenzwert erreicht wird, können automatisiert Sicherheitsmaßnahmen eingeleitet werden, um eine weitere Erhöhung der Temperatur zu verhindern. Wegen der großen Zeitkonstanten von Temperaturvorgängen und des Fehlens von aktiven Kühlmöglichkeiten können sich jedoch lange Verzögerungszeiten ergeben, bis sich tatsächlich eine signifikant niedrigere Batterietemperatur einstellt. Im Gegensatz dazu ermöglicht die Erfindung, den Entladevorgang bereits zu dessen Beginn in einem unkritischen Temperaturbereich so anzupassen, dass der Entladevorgang nicht durch ein etwaiges Erreichen eines kritischen Temperaturgrenzwerts und durch Einleiten entsprechender Sicherheitsmaßnahmen unterbrochen wird. Die Erfindung ermöglicht es, aus der Anstiegsfunktion der Batterietemperatur auf deren Endwert zu schließen. Somit stehen frühzeitig während des Entladevorgangs Informationen zur Verfügung, anhand derer auf den Entladevorgang eingewirkt werden kann, ohne dass eine kritische Batterietemperatur überhaupt erreicht wird.

Gemäß einer Ausführungsform wird ein Wendepunkt-Temperaturwert der Temperatur der Batterieeinheit zu demjenigen Zeitpunkt bestimmt, zu welchem der Wendepunkt auftritt. Der zu erwartende Maximalwert der Temperatur wird abhängig von dem bestimmten Wendepunkt-Temperaturwert bestimmt. Ferner kann der zu erwartende Maximalwert der Temperatur beispielsweise abhängig von einer Starttemperatur und gegebenenfalls von einer Umgebungstemperatur bestimmt werden. Insbesondere kann anhand des speziellen Temperaturwerts an dem Wendepunkt in Kenntnis des erwarteten Verlaufs besonders präzise auf den zu erwartenden Maximalwert rückgeschlossen werden.

Gemäß einer Ausführungsform wird der zu erwartende Maximalwert der Temperatur der Batterieeinheit ferner abhängig von einer Umgebungstemperatur bestimmt. Insbesondere kann durch Einbeziehen des aktuellen Werts der Umgebungstemperatur besonders präzise auf den zu erwartenden Maximalwert rückgeschlossen werden, insbesondere durch Korrigieren oder Kompensieren des Wendepunkt-Temperaturwerts mittels des aktuellen Umgebungstemperaturwerts.

Gemäß einer Ausführungsform wird der zu erwartende Maximalwert der Temperatur abhängig von einem vorgegebenen Verhältnis bzw. einer vorgegebenen Beziehung zwischen dem Wendepunkt-Temperaturwert, der Umgebungstemperatur und dem zu erwartenden Maximalwert bestimmt. Insbesondere kann dieses Temperaturverhältnis für den jeweiligen Typ der Batterieeinheit und für einen gegebenen Alterungszustand und ferner insbesondere für die jeweilige Stromstärke während des vorgegebenen Zeitintervalls vorab bestimmt bzw. erlernt werden, z.B. durch eine Parametrisierungsmessung.

Gemäß einer Ausführungsform wird der zu erwartende Maximalwert abhängig von dem folgenden Verhältnis X bestimmt:

$$X = \frac{T_{WP} - T_{Umg}}{T_{max} - T_{Umg}} \cdot 100\% \qquad (1)$$

Dabei bezeichnet $T_{WP}$ den Wendepunkt-Temperaturwert, $T_{Umg}$ bezeichnet die Umgebungstemperatur bzw. den aktuellen Umgebungstemperaturwert und $T_{max}$ bezeichnet den zu erwartenden Maximalwert. Das Verhältnis X ist insbesondere charakteristisch für den jeweiligen Typ der Batterieeinheit, die jeweilige Stromstärke während des vorgegebenen Zeitintervalls und für die jeweiligen Umgebungsbedingungen, insbesondere die jeweilige Umgebungstemperatur, den jeweiligen Wärmeübertragungskoeffizienten usw. Abhängig von dem jeweiligen vorgegebenen Verhältnis kann der zu erwartende Maximalwert gemäß folgender Formel bestimmt werden:

$$T_{max} = \frac{T_{WP} - T_{Umg}}{X} \cdot 100\% + T_{Umg} \qquad (2)$$

Gemäß einer Ausführungsform wird der Entladevorgang während des vorgegebenen Zeitintervalls mit einer konstanten Stromstärke durchgeführt. Insbesondere kann bei konstanter Stromstärke während des vorgegebenen Zeitintervalls anhand des Wendepunkts präzise auf den zu erwartenden Maximalwert rückgeschlossen werden, wenn der Entladevorgang mit dieser konstanten Stromstärke fortgesetzt werden würde. Somit kann zweckmäßigerweise beurteilt werden, ob der Entladevorgang mit der konstanten Stromstärke auf sichere und effiziente Weise fortgesetzt werden kann oder ob die Stromstärke verändert werden sollte, insbesondere um ein Erreichen der maximal zulässigen Temperatur zu vermeiden und/oder um den Entladevorgang zu optimieren.

Gemäß einer Ausführungsform wird der zu erwartende Maximalwert abhängig von der Stromstärke des Stroms des Entladevorgangs während des vorgegebenen Zeitintervalls bestimmt. Insbesondere ist das Temperaturverhältnis zwischen Wendepunkt-Temperaturwert, Umgebungstemperatur und zu erwartendem Maximalwert charakteristisch für die Stromstärke während des vorgegebenen Zeitintervalls, so dass diese Stromstärke zweckmäßigerweise in die Abschätzung des zu erwartenden Maximalwerts einbezogen wird bzw. so dass das für die jeweilige konkrete Stromstärke gültige Temperaturverhältnis verwendet wird.

Gemäß einer Ausführungsform wird der bestimmte zeitliche Verlauf der Temperatur der Batterieeinheit gefiltert bzw. ein (mathematischer) Filter wird auf den bestimmten zeitlichen Verlauf der Temperatur angewendet. Der Wendepunkt des zeitlichen Verlaufs der Temperatur wird abhängig von diesem gefilterten zeitlichen Verlauf bestimmt. Durch derartiges Filtern kann einer Verfälschung des Ergebnisses durch ein mögliches Rauschen der Temperaturmesseinheit vorgebeugt werden, da dieses insbesondere durch die Gradientenbildung verstärkt werden könnte.

Gemäß einer Ausführungsform erfolgt das Filtern des bestimmten zeitlichen Verlaufs der Temperatur mit Hilfe eines Savitzky-Golay-Filters und/oder eines gleitenden-Mittelwert-Filters. Bei einem Savitzky-Golay-Filter handelt es sich insbesondere um einen Filter mit endlicher Impulsantwort (engl.: "Finite Impulse Response Filter", FIR-Filter), wobei Filterkoeffizienten derart gebildet werden, dass sich eine polynomiale Regression ergibt. Bei einem gleitenden-Mittelwert-Filter handelt es sich insbesondere um einen FIR-Filter, wobei ein gleitender Mittelwert durch Summieren von Werten (innerhalb eines gegebenen Zeitfensters) und Dividieren durch die jeweilige Anzahl der summierten Werte verwendet wird.

Gemäß einer Ausführungsform erfolgt das Durchführen des Entladevorgangs nach dem vorgegebenen Zeitintervall ferner abhängig von einem zulässigen Grenzwert für die Temperatur der Batterieeinheit. Wenn der zu erwartende Maximalwert den zulässigen Grenzwert erreicht, kann der Entladevorgang zweckmäßigerweise derart beeinflusst werden, dass die Temperatur der Batterieeinheit den Grenzwert nicht erreicht.

Gemäß einer Ausführungsform wird die Stromstärke des Stroms des Entladevorgangs nach dem vorgegebenen Zeitintervall reduziert, wenn der zu erwartende Maximalwert den zulässigen Grenzwert erreicht oder überschreitet, insbesondere so dass die Temperatur der Batterieeinheit den zulässigen Grenzwert während des restlichen Entladevorgangs unterschreitet bzw. nicht erreicht. Durch Reduzieren der Stromstärke kann die Wärmeentwicklung des Entladevorgangs reduziert werden, so dass der restliche Entladevorgang auf sichere Weise ohne Unterbrechungen und ohne Einleiten etwaiger Sicherheitsmaßnahmen durchgeführt werden kann.

Gemäß einer Ausführungsform wird die Stromstärke des Stroms des Entladevorgangs nach dem vorgegebenen Zeitintervall erhöht, wenn der zu erwartende Maximalwert den zulässigen Grenzwert unterschreitet bzw. nicht erreicht. Wenn die während des vorgegebenen Zeitintervalls verwendete Stromstärke nach dem vorgegebenen Zeitintervall beibehalten würde, würde die Temperatur der Batterieeinheit den zulässigen Grenzwert also nicht erreichen. Die Stromstärke kann daher nach dem vorgegebenen Zeitintervall zweckmäßigerweise erhöht werden, um den Entladevorgang zeitlich zu optimieren.

Die Erfindung eignet sich zweckmäßigerweise für eine Vielzahl unterschiedlicher Batterieeinheiten, z.B. Lithium-Ionen-Batterien, insbesondere für Batterieeinheiten aus dem (Kraft- bzw. Elektro-) Fahrzeugbereich oder der elektrischen Antriebstechnik. Beispielsweise kann die Batterieeinheit eine sog. Batteriezelle sein, als welche eine kleinste verbaute Batterieeinheit verstanden wird, welche beispielsweise eine Zellenspannung zwischen 2,5V und 4,2V aufweisen kann. Ferner kann die Batterieeinheit beispielsweise als ein Batteriemodul ausgebildet sein, als welches insbesondere eine Reihenschaltung mehrerer derartiger Batteriezellen verstanden wird, welche z.B. eine Nennspannung von bspw. 60V aufweisen kann. Beispielsweise kann die Batterieeinheit auch ein Batteriepack oder auch ein integriertes Batteriepack bzw. eine sog. Zelle-in-Pack (engl. "Cell-to-Pack") sein, als welches eine Reihenschaltung aus einer Vielzahl von derartigen Batteriemodulen bezeichnet wird, welche z.B. eine Nennspannung von 200V bis zu 1.000V (oder zukünftig möglicherweise mehr) aufweisen kann. Besonders zweckmäßig eignet sich die Erfindung somit für die elektrochemische (Tief-)Entladung von Lithium-Ionen-Batteriemodulen, Batteriezellen und Batteriepacks.

Eine erfindungsgemäße Recheneinheit, ist, insbesondere programmtechnisch, dazu eingerichtet, ein erfindungsgemäßes Verfahren durchzuführen.

Eine erfindungsgemäße Vorrichtung weist eine Ausgestaltung einer erfindungsgemäßen Recheneinheit auf. Ferner weist die Vorrichtung eine Entladeeinheit bzw. eine Entladeschaltung auf, die dazu eingerichtet, mit der Batterieeinheit elektrisch verbunden zu werden und die Batterieeinheit zu entladen. Die Entladeeinheit kann beispielsweise ein Entladegerät (Senke) aufweisen oder beispielsweise eine elektrische Quelle mit Umpolung oder ein Vierquadranten-Netzteil. Die Vorrichtung weist ferner eine Temperaturmesseinheit auf, die dazu eingerichtet ist, eine Temperatur der Batterieeinheit bzw. deren zeitlichen Verlauf zu erfassen. Beispielsweise kann die Temperaturmesseinheit eine Wärmebildkamera und/oder ein Widerstandsthermometer und/oder ein Thermoelement aufweisen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung

Figur 1     zeigt schematisch eine Ausgestaltung einer erfindungsgemäßen Vorrichtung, die dazu eingerichtet ist, eine Ausführungsform eines erfindungsgemäßen Verfahrens durchzuführen.

Figur 2     zeigt schematisch eine Ausführungsform eines erfindungsgemäßen Verfahrens als ein Blockdiagramm.

Figur 3     zeigt schematisch ein Diagramm eines zeitlichen Verlaufs einer Stromstärke, ein Diagramm eines zeitlichen Verlaufs einer Temperatur und ein Diagramm eines Gradienten eines zeitlichen Verlaufs einer Temperatur, welche im Rahmen einer Ausführungsform eines erfindungsgemäßen Verfahrens bestimmt werden können.

Detaillierte Beschreibung der Zeichnung

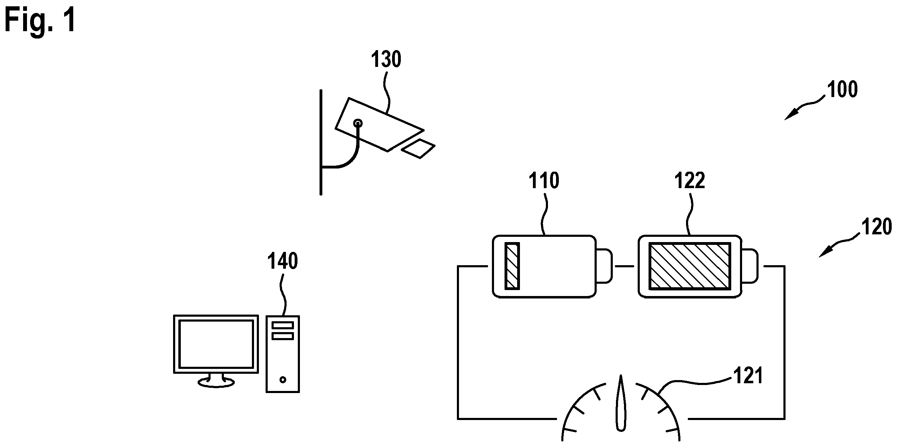

Figur 1 zeigt schematisch eine Ausgestaltung einer erfindungsgemäßen Vorrichtung 100 zum Entladen einer Batterieeinheit 110. Bei der Batterieeinheit 110 kann es sich um eine Batterie eines (Kraft- bzw. Elektro-)Fahrzeugs handeln, z.B. um ein Batteriemodul, eine Batteriezelle oder ein Batteriepack, wobei diese Batterieeinheit 110 z.B. am Ende ihrer Lebensdauer vollständig tiefentladen werden soll, um danach einem Recyclingprozess zugeführt zu werden.

Die Vorrichtung 100 weist eine Entladeeinheit 120 auf, die dazu eingerichtet, mit der zu entladende Batterieeinheit 110 elektrisch verbunden zu werden. Beispielsweise kann die Entladeeinheit 120 ein Entladegerät 121 mit Polumschaltung sowie ein Treibermodul 122 in Form einer weiteren Batterieeinheit aufweisen. Es können auch mehrere Treibermodule 122 jeweils in Form einer weiteren Batterieeinheit verwendet werden. Aufgrund des Unterschieds des Ladezustands zwischen der Batterieeinheit 110 und dem Treibermodul 122 sowie aufgrund der Reihenschaltung der Batterieeinheit 110 und des Treibermoduls 122 wird die Batterieeinheit 110 tiefentladen. Die Restladung des Treibermoduls 122 oder der Treibermodule 122 verleiht der Gesamtanordnung zweckmäßigerweise eine ausreichend hohe Spannung, um die Tiefentladung der Batterieeinheit 110 zu ermöglichen. Insbesondere kann eine größere Anzahl von Treibermodulen 122 in Reihe geschaltet werden, die mit der Zeit alle (tief-)entladen werden und durch die Reihenschaltung eine für die Tiefentladung ausreichend hohe Summenspannung bilden. Das Treibermodul 122 bzw. die von Treibermodule 122 können somit im Verlauf des (kontinuierlichen) Entladeprozesses ebenfalls tiefentladen und durch andere Module ersetzt werden.

Es ist auch denkbar auf derartige Treibermodule 122 zu verzichten, wenn die Entladeeinheit 120 beispielsweise eine elektrische Quelle mit Umpolung oder ein Vierquadranten-Netzteil aufweist.

Ferner weist die Vorrichtung 100 eine Temperaturmesseinheit 130 auf, die dazu eingerichtet ist, eine Temperatur der Batterieeinheit 110 zu erfassen. Die Temperaturmesseinheit 130 kann beispielsweise eine Wärmebildkamera und/oder ein Widerstandsthermometer, z.B. ein PT100-Platin-Widerstandsthermometer, und/oder ein Thermoelement, z.B. vom Typ K, aufweisen.

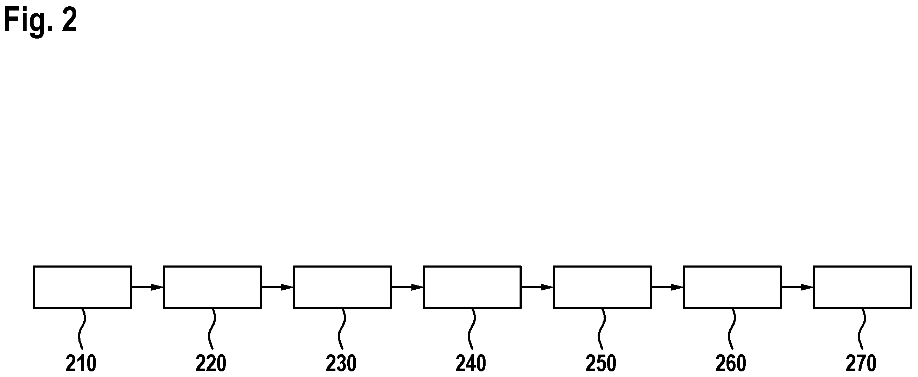

Die Vorrichtung 100 weist ferner eine Rechen- bzw. Steuereinheit 140 auf, die dazu eingerichtet ist, die von der Temperaturmesseinheit 130 erfassten Temperaturwerte auszuwerten und den Entladevorgang der Batterieeinheit 110 durch die Entladeeinheit 120 durchzuführen. Insbesondere kann die Recheneinheit 140 im Zuge dessen die Stromstärke eines (Entlade-)Stroms variieren, mit welchem die Batterieeinheit 110 entladen wird. Zu diesem Zweck ist die Recheneinheit 140, insbesondere programmtechnisch, dazu eingerichtet ist, eine Ausführungsform eines erfindungsgemäßen Verfahrens durchzuführen, wie nachfolgend in Bezug auf Figur 2 erläutert wird.

In Figur 2 ist die Ausführungsform des erfindungsgemäßen Verfahrens schematisch als ein Blockdiagramm dargestellt. In einem Schritt 210 wird die zu entladende Batterieeinheit 110 mit der Entladeeinheit 120 elektrisch verbunden. In einem Schritt 220 weist die Recheneinheit 140 die Entladeeinheit 120 an, den Entladevorgang mit einem Entladestrom mit konstanter Stromstärke zu starten. In einem Schritt 230 bestimmt die Recheneinheit 140 mittels der Temperaturmesseinheit 130 einen zeitlichen Verlauf der Temperatur der Batterieeinheit 110 während eines vorgegebenen Zeitintervalls. Das vorgegebene Zeitintervall wird zusammen mit dem Beginn des Entladevorgangs gestartet. In einem Schritt 240 filtert die Recheneinheit 140 den bestimmten zeitliche Verlauf, beispielsweise mittels eines Savitzky-Golay-Filters oder eines gleitenden-Mittelwert-Filters.

In einem Schritt 250 bestimmt die Recheneinheit 140 einen Wendepunkt des gefilterten zeitlichen Verlaufs der Temperatur in dem vorgegebenen Zeitintervall. Zu diesem Zweck wird ein Gradient bzw. die erste zeitliche Ableitung des gefilterten zeitlichen Verlaufs bestimmt und ein Extremum des Gradienten bzw. der ersten zeitlichen Ableitung wird als der Wendepunkt bestimmt. Ferner wird der Wendepunkt-Temperaturwert der Temperatur der Batterieeinheit zu demjenigen Zeitpunkt bestimmt, zu welchem der Wendepunkt auftritt.

In einem Schritt 260 bestimmt die Recheneinheit 140 einen zu erwartenden Maximalwert der Temperatur der Batterieeinheit 110 abhängig von dem bestimmten Wendepunkt bzw. abhängig vom Wendepunkt-Temperaturwert. Dieser zu erwartende Maximalwert charakterisiert insbesondere einen Endwert, welchen die Temperatur der Batterieeinheit 110 am Ende des Entladevorgangs erreichen würde, wenn der Entladevorgang mit der konstanten Stromstärke nach dem Ende des Zeitintervalls fortgesetzt werden würde.

Die Bestimmung des zu erwartenden Maximalwerts erfolgt ferner in Abhängigkeit von der Umgebungstemperatur, welche ebenfalls mittels der Temperaturmesseinheit 130 bestimmt werden kann. Insbesondere wird der zu erwartenden Maximalwert $T_{max}$ abhängig von einem vorgegebenen bzw. vorab ermittelten Verhältnis X bestimmt, wobei dieses Verhältnis X den zu erwartenden Maximalwert $T_{max}$, die Umgebungstemperatur $T_{Umg}$ und den Wendepunkt-Temperaturwert $T_{WP}$ für den jeweiligen Typ der Batterieeinheit 110 und die jeweilige Stromstärke während des vorgegebenen Zeitintervalls in Beziehung setzt. Insbesondere wird das Verhältnis X gemäß der weiter oben erläuterten Formel (1) ausgedrückt und der zu erwartenden Maximalwert $T_{max}$ wird gemäß der weiter oben erläuterten Formel (2) bestimmt.

In einem Schritt 270 führt die Recheneinheit 140 den restlichen Entladevorgang nach dem vorgegebenen Zeitintervall abhängig von dem bestimmten zu erwartenden Maximalwert $T_{max}$ durch. Zu diesem Zweck vergleicht die Recheneinheit 140 den zu erwartenden Maximalwert $T_{max}$ mit einem zulässigen Grenzwert, welchen die Batterieeinheit 110 im Zuge des Entladevorgangs aus Sicherheitsgründen nicht überschreiten sollte. Wenn der zu erwartende Maximalwert den zulässigen Grenzwert erreicht oder überschreitet, reduziert die Recheneinheit 140 die Stromstärke des Entladestroms für den restlichen Entladevorgang nach dem vorgegebenen Zeitintervall entsprechend. Somit kann sichergestellt werden, dass die Temperatur der Batterieeinheit 110 während des restlichen Entladevorgangs den Grenzwert nicht erreicht und dass somit kein Sicherheitsrisiko entsteht und keine Sicherheitsmaßnahmen eingeleitet werden müssen. Beispielsweise kann der Entladestrom prozentual so reduziert werden, wie der zu erwartende Maximal-wert $T_{max}$ den zulässigen Grenzwert übersteigt. Auch andere Zusammenhänge sind vorteilhaft und können insbesondere vorab im Rahmen von Messungen ermittelt worden sein.

Wenn der zu erwartende Maximalwert den zulässigen Grenzwert hingegen nicht erreicht, erhöht die Recheneinheit 140 die Stromstärke des Entladestroms für den restlichen Entladevorgang nach dem vorgegebenen Zeitintervall, insbesondere um den Entladevorgang zeitlich zu optimieren. Beispielsweise kann der Entladestrom prozentual so erhöht werden, wie der zu erwartende Maximalwert $T_{max}$ den zulässigen Grenzwert unterschreitet. Auch andere Zusammenhänge sind vorteilhaft und können insbesondere vorab im Rahmen von Messungen ermittelt worden sein.

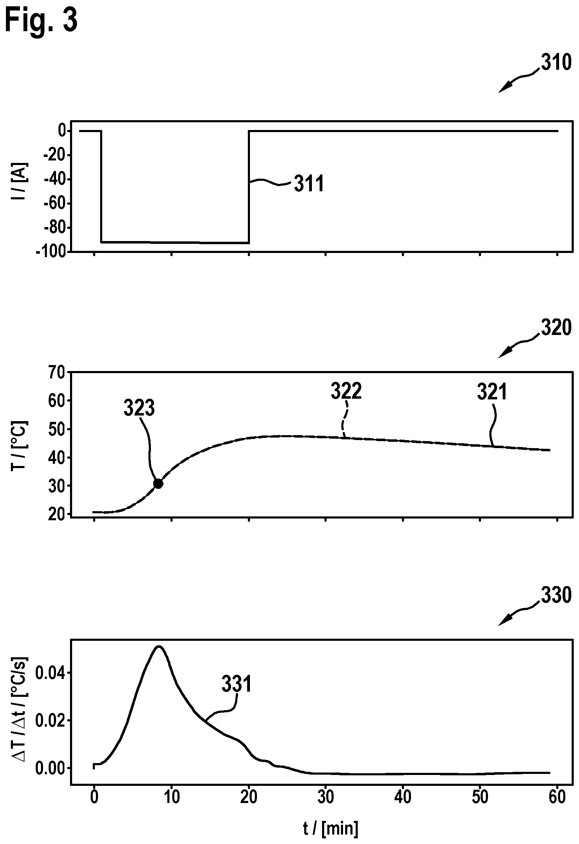

Nachfolgend wird anhand von Figur 3 anhand eines Beispiels die Bestimmung des zu erwartenden Maximalwerts erläutert. Figur 3 zeigt schematisch Diagramme, die im Rahmen der Ausführungsform des erfindungsgemäßen Verfahrens bestimmt werden können. Diagramm 310 zeigt beispielhaft einen Verlauf einer Stromstärke I in Ampere aufgetragen gegen die Zeit t in Minuten während des Entladevorgangs. Diagramm 320 zeigt beispielhaft einen zeitlichen Verlauf einer Temperatur T in [°C] aufgetragen gegen die Zeit t in Minuten. Diagramm 330 zeigt beispielhaft einen Gradienten $\Delta T/\Delta t$ in der Einheit [°C/s] aufgetragen gegen die Zeit t in Minuten. Die einzelnen Kurven in den Diagrammen 310, 320, 330 repräsentieren einen Entladevorgang der Batterieeinheit 110, der über dessen gesamte Dauer mit derselben konstanten Stromstärke durchgeführt wird.

Kurve 311 in dem Stromstärke-Zeit-Diagramm 310 repräsentiert die Stromstärke $I_{RM}$ während des Entladestroms. Die Kurve 321 in dem Temperatur-Zeit-Diagramm 320 repräsentiert den zeitlichen Verlauf $T_{RM}$ der Temperatur der Batterieeinheit 110. Die Kurve 322 repräsentiert den mittels des Savitzky-Golay-Filters gefilterten zeitlichen Verlauf $T_{RMSG}$ der Temperatur der Batterieeinheit 110. Mit dem Bezugszeichen 323 ist der Wendepunkt in dem gefilterten zeitlichen Temperaturverlauf 322 bezeichnet. Die Kurve 331 in dem Gradienten-Zeit-Diagramm 330 repräsentiert den Gradienten $\Delta T_{RMSG}/\Delta t$ des gefilterten zeitlichen Temperaturverlauf 322.

Der Verlauf 321 der Temperaturerhöhung der Oberfläche der Batterieeinheit 110 während des Prozesses der Tiefentladung entspricht hier einem Verlauf eines Verzögerungsgliedes zweiter Ordnung (PT2). Auch andere Zusammenhänge oder Verläufe höherer Ordnung sind möglich und können insbesondere vorab im Rahmen von Messungen ermittelt worden sein. Generell ist dabei von einem aperiodischen Verlauf, also ohne Überschwingen, auszugehen. Die Oberflächentemperatur nähert sich damit im stationären Fall asymptotisch dem zu erwartenden Maximalwert an. Bei gegebener konstanter Stromstärke kann anhand der Lage des Wendepunkts 323 vorab bestimmt werden, welcher Maximalwert zu erwarten ist. Der Wendepunkt 323 kann anhand des Differenzenquotienten 331 des gefilterten Temperaturverlaufs 322 gemäß nachfolgender Formel (3) bestimmt werden:

$$\frac{\Delta T_{RMSG}(t)}{\Delta t} = \frac{T_{RMSG}(t) - T_{RMSG}(t-1)}{\Delta t} \qquad (3)$$

Dabei wird die zeitabhängige Differenz der gefilterten Oberflächentemperaturen der Batterie, $\Delta T_{RMSG}(t)$, anhand des aktuellen und des vergangenen Messwerts berechnet und durch die Zeitschritte der Messzeitpunkte, $\Delta t$, geteilt. Anhand des Zeitpunkts des Maximums des Gradientenverlaufs 331, $\Delta T_{RMSG}/\Delta t$, kann der Zeitpunkt des Wendepunkts 323 bestimmt werden. Durch das Glätten bzw. Filtern der Messkurve 321 der Temperatur kann insbesondere einer Verfälschung des Ergebnisses durch ein mögliches Rauschen der Temperaturmesseinheit 130 vorgebeugt werden, da dieses Rauschen durch die Gradientenbildung verstärkt werden könnte.

Durch die Kenntnis der Temperatur an dem Wendepunkt 323 kann anhand des bei diesem Strom üblichen Verhältnisses X gemäß der Formel (2) der zu erwartende Maximalwert bestimmt werden. In dem in Figur 3 dargestellten Beispiel etwa ergibt sich für einen Wendepunkt-Temperaturwert von $T_{WP}$ von 30,5°C, eine Umgebungstemperatur $T_{Umg}$ von 19,7°C und einem für die jeweilige Stromstärke gültigen Verhältnis X von 39,15% beispielsweise ein zu erwartender Maximalwert $T_{max}$ von 47,4°C.

Wenn der zulässige Grenzwert für die jeweilige Batterieeinheit beispielsweise bei 80°C liegt, kann in diesem Beispiel nach dem vorgegebenen Zeitintervall die Stromstärke erhöht werden, um den restlichen Entladevorgang zeitlich zu optimieren, beispielsweise um (1- 47,4/80) = ca. 41%. Dieser lineare Zusammenhang soll lediglich als vereinfachtes Beispiel dienen.

Aufgrund komplexer physikalischer Zusammenhänge zwischen Temperatur, Stromstärke, Geometrie, Umgebungsbedingungen, Batterietyp, Zellchemie usw. kann auch ein anderer Zusammenhang gegeben sein, z.B. ein quadratischer oder exponentieller Zusammenhang. Beispielsweise kann die Verlustleistung quadratisch vom Strom abhängen und die Abgabe der Wärmeleistung kann als vierte Potenz von der Temperatur abhängen, so dass es auch zu komplexen, nicht-linearen Zusammenhängen kommen kann.

**Patentansprüche**

1. Verfahren zum Entladen einer Batterieeinheit (110), umfassend:

   Durchführen (220) eines Entladevorgangs der Batterieeinheit (110);
   Bestimmen (230) eines zeitlichen Verlaufs einer Temperatur der Batterieeinheit (110) während eines vorgegebenen Zeitintervalls des Entladevorgangs, insbesondere zu Beginn des Entladevorgangs;
   Bestimmen (250) eines Wendepunkts des zeitlichen Verlaufs der Temperatur in dem vorgegebenen Zeitintervall;
   Bestimmen (260) eines zu erwartenden Maximalwerts der Temperatur der Batterieeinheit (110) abhängig von dem bestimmten Wendepunkt;
   Durchführen (270) des Entladevorgangs nach dem vorgegebenen Zeitintervall abhängig von dem bestimmten, zu erwartenden Maximalwert, insbesondere Vorgeben einer Stromstärke des Entladevorgangs nach dem vorgegebenen Zeitintervall abhängig von dem bestimmten zu erwartenden Maximalwert.

2. Verfahren nach Anspruch 1, ferner umfassend:
   Bestimmen (250) eines Wendepunkt-Temperaturwerts der Temperatur der Batterieeinheit (110) zu demjenigen Zeitpunkt, zu welchem der Wendepunkt auftritt, wobei das Bestimmen (260) des zu erwartenden Maximalwerts der Temperatur der Batterieeinheit (110) abhängig von dem bestimmten Wendepunkt-Temperaturwert erfolgt.

3. Verfahren nach Anspruch 1 oder 2, wobei das Bestimmen (260) des zu erwartenden Maximalwerts der Temperatur der Batterieeinheit (110) ferner abhängig von einer Umgebungstemperatur erfolgt.

4. Verfahren nach Anspruch 2 und 3, wobei das Bestimmen (260) des zu erwartenden Maximalwerts der Temperatur der Batterieeinheit (110) abhängig von einem vorgegebenen Verhältnis zwischen dem Wendepunkt-Temperaturwert, der Umgebungstemperatur und dem zu erwartenden Maximalwert erfolgt.

5. Verfahren nach Anspruch 4, wobei das Bestimmen (260) des zu erwartenden Maximalwerts der Temperatur der Batterieeinheit (110) abhängig von dem folgenden vorgegebenen Verhältnis X erfolgt:

$$X = \frac{T_{WP} - T_{Umg}}{T_{max} - T_{Umg}} \cdot 100\%$$

wobei $T_{WP}$ der Wendepunkt-Temperaturwert ist, wobei $T_{Umg}$ die Umgebungstemperatur ist und wobei $T_{max}$ der zu erwartenden Maximalwert ist.

6. Verfahren nach einem der vorstehenden Ansprüche, wobei der Entladevorgang während des vorgegebenen Zeitintervalls mit einer konstanten Stromstärke durchgeführt wird (210).

7. Verfahren nach einem der vorstehenden Ansprüche, wobei das Bestimmen (260) des zu erwartenden Maximalwerts der Temperatur der Batterieeinheit (110) ferner abhängig von einer Stromstärke eines Stroms des Entladevorgangs während des vorgegebenen Zeitintervalls erfolgt.

8. Verfahren nach einem der vorstehenden Ansprüche, ferner umfassend:
Filtern (240) des bestimmten zeitlichen Verlaufs der Temperatur der Batterieeinheit (110), wobei das Bestimmen (250) des Wendepunkts des zeitlichen Verlaufs der Temperatur abhängig von dem gefilterten zeitlichen Verlauf der Temperatur der Batterieeinheit (110) erfolgt.

9. Verfahren nach Anspruch 8, wobei das (240) Filtern des bestimmten zeitlichen Verlaufs der Temperatur mit Hilfe eines Savitzky-Golay-Filters und/oder eines gleitenden-Mittelwert-Filters erfolgt.

10. Verfahren nach einem der vorstehenden Ansprüche, wobei das Durchführen (270) des Entladevorgangs nach dem vorgegebenen Zeitintervall abhängig von dem bestimmten, zu erwartenden Maximalwert ferner abhängig von einem zulässigen Grenzwert für die Temperatur der Batterieeinheit (110) erfolgt.

11. Verfahren nach Anspruch 10, wobei das Durchführen (270) des Entladevorgangs nach dem vorgegebenen Zeitintervall abhängig von dem bestimmten, zu erwartenden Maximalwert umfasst:

Reduzieren einer Stromstärke eines Stroms des Entladevorgangs nach dem vorgegebenen Zeitintervall, wenn der zu erwartende Maximalwert den zulässigen Grenzwert erreicht oder überschreitet;
Erhöhen der Stromstärke des Stroms des Entladevorgangs nach dem vorgegebenen Zeitintervall, wenn der zu erwartende Maximalwert den zulässigen Grenzwert nicht erreicht.

12. Recheneinheit (140) umfassend einen Prozessor, der so konfiguriert ist, dass er das Verfahren nach einem der vorstehenden Ansprüche ausführt.

13. Vorrichtung (100) zum Entladen einer Batterieeinheit (110), aufweisend:

eine Entladeeinheit (120), die dazu eingerichtet, mit der Batterieeinheit (110) verbunden zu werden und die Batterieeinheit (110) zu entladen;
eine Temperaturmesseinheit (130), die dazu eingerichtet ist, eine Temperatur der Batterieeinheit (110) zu erfassen; und
die Recheneinheit (140) nach dem vorhergehenden Anspruch.

14. Computerprogramm umfassend Befehle, die bei der Ausführung des Programms durch einen Computer diesen veranlassen, das Verfahren nach Anspruch 1 bis 11 auszuführen.

15. Computerlesbarer Datenträger, auf dem das Computerprogramm nach Anspruch 14 gespeichert ist.

**Fig. 1**

Fig. 2

# Fig. 3

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 4 366 028 A1 (CONTEMPORARY AMPEREX TECHNOLOGY CO LTD [CN]) 8. Mai 2024 (2024-05-08) * Absatz [0034] - Absatz [0078]; Abbildungen 1-7 * ----- | 1-15 | INV. B60L58/24 B60L58/26 H01M10/44 H01M10/48 H02J7/00 |
| A | US 2024/136606 A1 (NEMBHARD NICOLE [SE] ET AL) 25. April 2024 (2024-04-25) * das ganze Dokument * ----- | 1-15 | |
| A | EP 4 164 024 A1 (WESTSAECHSISCHE HOCHSCHULE ZWICKAU [DE]; SCHOLZ RECYCLING GMBH [DE]) 12. April 2023 (2023-04-12) * Absatz [0024] - Absatz [0052]; Abbildungen 1-6 * ----- | 1-15 | |
| A | CN 113 193 251 A (CHONGQING VOCATIONAL INST ENG) 30. Juli 2021 (2021-07-30) * das ganze Dokument * ----- | 1-15 | RECHERCHIERTE SACHGEBIETE (IPC) H01M H02J B60L |

Der vorliegende Recherchenbericht wurde für alle Patentansprüche erstellt

| Recherchenort | Abschlußdatum der Recherche | Prüfer |
|---|---|---|
| Den Haag | 10. Oktober 2025 | Degraeve, Alexis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 18 0650

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-10-2025

| Im Recherchenbericht angeführtes Patentdokument | | Datum der Veröffentlichung | Mitglied(er) der Patentfamilie | | Datum der Veröffentlichung |
|---|---|---|---|---|---|
| EP 4366028 | A1 | 08-05-2024 | CN | 118056313 A | 17-05-2024 |
| | | | EP | 4366028 A1 | 08-05-2024 |
| | | | US | 2024250320 A1 | 25-07-2024 |
| | | | WO | 2023221055 A1 | 23-11-2023 |
| US 2024136606 | A1 | 25-04-2024 | CA | 3212287 A1 | 09-09-2022 |
| | | | EP | 4053965 A1 | 07-09-2022 |
| | | | EP | 4073869 A1 | 19-10-2022 |
| | | | US | 2024136606 A1 | 25-04-2024 |
| | | | WO | 2022184878 A1 | 09-09-2022 |
| EP 4164024 | A1 | 12-04-2023 | KEINE | | |
| CN 113193251 | A | 30-07-2021 | KEINE | | |

Für nähere Einzelheiten zu diesem Anhang : siehe Amtsblatt des Europäischen Patentamts, Nr.12/82

EPO FORM P0461